Europäisches Patentamt

European Patent Office

Office européen des brevets

(19)

(11) Publication number: **0 226 274**

**A2**

(12) # EUROPEAN PATENT APPLICATION

(21) Application number: **86307207.0**

(22) Date of filing: **18.09.86**

(51) Int. Cl.⁴: **G02B 6/40**

(30) Priority: **29.11.85 JP 183075/85**

(43) Date of publication of application:
**24.06.87 Bulletin 87/26**

(84) Designated Contracting States:
**DE FR GB IT**

(71) Applicant: THE FURUKAWA ELECTRIC CO.,
LTD.
6-1, 2-chome, Marunouchi Chiyoda-ku
Tokyo(JP)
Applicant: Nippon Telegram & Telephone Co.
Ltd.
No. 1-6 Uchisaiwaicho 1-chome Chiyoda-ku
Tokyo(JP)

(72) Inventor: Hayashi, Takehiro c/o Chiba Works
Furukawa Electric Co. Ltd. No. 6,
Yahatakaigandori
Ichihara-shi Chiba-ken(JP)
Inventor: Yuguchi, Renichi c/o Chiba Works
Furukawa Electric Co. Ltd. No. 6,
Yahatakaigandori
Ichihara-shi Chiba-ken(JP)
Inventor: Tachigami, Shigeru c/o Chiba Works
Furukawa Electric Co. Ltd. No. 6,
Yahatakaigandori
Ichihara-shi Chiba-ken(JP)
Inventor: Satake, Toshiaki c/o Ibaraki El. Com.
Lab.
Nippon TT Co.Ltd. 162 Aza Shirane, Ooaza
Shirakata
Tookaimura Naka-gun Ibaraki-ken(JP)

(74) Representative: Gibson, Stewart Harry
Urquhart-Dykes & Lord Midsummer House
419B Midsummer Boulevard
Central Milton Keynes, MK9 3BN(GB)

(54) **Multicore optical fiber with optical connectors.**

(57) A multicore optical fiber (1,1) with optical connectors (11) in which the optical connectors are attached to the ends of a plurality of parallel optical fibers (2): projections (13) are formed on the end faces of the optical connectors (11) to expose the end faces of the optical fibers (2) at the ends of these projections, and an optical connector opposing guide (15,16) is provided at the end faces of the optical connectors apart from the projections (13).

Thus, the end faces of the opposed projections (13) are smaller in area than the end faces of the optical connectors, and accurate alignment can be achieved together with sufficient force of the projections against each other.

# F I G. I

## MULTICORE OPTICAL FIBER WITH OPTICAL CONNECTORS

This invention relates to a multicore optical fiber with optical connectors in which optical connectors are simultaneously attached to the outer periphery of the ends of a plurality of optical fibers for connecting the optical fibers to each other.

Optical connectors have been widely used as means of connecting optical fibers and particularly as connecting means of reproducible optical connectors, and such connectors are ordinarily attached to the ends of the optical fibers.

As a method of attaching optical connectors to the ends of optical fibers, it is general to fix optical connectors fabricated in advance through plastic molding means or metal molding means to the outer periphery of the ends of the optical fibers from which coatings are removed or to insert the ends of the optical fibers from which coatings are removed into a molding die and to then plastic-mold the optical connectors at the outer periphery of the ends of the optical fibers. The ends of the optical connectors attached to the outer periphery of the ends of the optical fiber are then polished to precisely smooth surface together with the ends of the optical fibers.

When the pairs of optical fibers are connected through the abovementioned optical connectors, the ends of the optical connectors attached to the ends of the optical fibers are opposed and held by an optical adapter in the opposed state.

It is desirable in the opposed optical fibers to precisely bring the axial centers of paired optical fibers into coincidence and to completely contact between the end faces of the paired optical fibers, thereby reducing the connecting loss of the optical fibers by obtaining such connecting state.

In order to obtain the contacted state of the end faces of the optical fibers in the abovementioned conventional example, it is indispensable to finish the end faces of the paired optical fibers accurately perpendicularly to a guiding axis, to finish the end faces of the optical connector and the end faces of the optical fibers in the same plane, and further to accurately finish the flatness of the end faces of the optical fibers. It is very difficult to accurately polish the entire end faces of the optical fibers having considerable size as compared with the sectional areas of the optical fibers.

Further, when the end face of the one optical connector and the end face of the other optical connecter are entirely opposed with a predetermined force, the opposing force per unit area decreases. Accordingly, the opposing forces of the end faces of the optical fibers indispensably decreases to hardly obtain sufficiently contacting state of the end faces of the optical fibers.

Particularly, in the case of multicore optical fiber with optical connectors in which the optical connectors are simultaneously attached to the end faces of a plurality of parallel optical fibers, the influence of insufficient accuracy of the end faces of the optical connectors and the insufficient opposing forces increase to cause the optical fiber pairs to be difficult to be preferably connected with low loss.

When the end faces of the optical fibers are projected from the end faces of the optical connectors to oppose the end faces of the optical fibers, the end faces of the optical fiber will be unpreferably damaged.

Accordingly, an object of this invention is to provide a multicore optical fiber with optical connectors which can eliminates the abovementioned drawbacks and can readily provide the accuracy of the end faces of the optical connectors including the end faces of the optical fibers and completely contacted states of the end faces of the optical fibers and yet provide sufficient opposing force.

In order to achieve the above and other objects, there is provided a multicore optical fiber with optical connectors in which optical connectors are simultaneously attached to the ends of the plurality of parallel optical fibers comprising projections formed at parts of the end faces of the optical connectors to expose the end faces of the optical fibers at the ends of the projections, and an optical connector opposing guide provided at the end faces of the optical connectors except the projection.

Since the multicore optical fiber with optical connectors according to this invention comprises projections formed at parts of the end faces of the optical connectors to expose the end faces of the optical fibers in the same place as the end faces of the projections, when a plurality pairs of optical fibers are connected through such optical connectors, the end face of the projection smaller in area than the end face of the optical connector may be opposed, and when the paired optical fibers are connected in this manner, preferably connected state can be obtained by the following reasons.

Reason (1)

In case of this invention, it is not necessary to entirely polish the end faces of the optical fibers, and since only the end faces of the projection smaller than this may be precisely polished, the accuracy of the opposed faces may be readily obtained to provide preferable connected state depending upon the polishing accuracy.

Reason (2)

When two opposed faces (having area S) are opposed by an opposing force F, the opposing force f per unit area becomes $f = F/S$, and f in this case increases more when S is smaller in case that F is constant.

In the general connection of the optical fibers by the optical connectors, since the end faces of the optical connectors including the end faces of the optical fibers are entirely opposed, the opposing force f per unit area decreases.

In this invention, the end faces of the optical connectors are not entirely opposed, but the end faces of the projections smaller in area than the end faces of the optical connectors are opposed, and the opposing force f per unit area increases to exhibit the highly contacted state between the end faces of the optical fibers, thereby obtaining preferable connected state.

In case of this invention, since the optical fibers are opposed through the end faces of the projections, the end faces of the optical fiber are not damaged as observed in case of opposing the end faces of the optical fibers.

The above and other related objects and features of the invention will be apparent from a reading of the following description of the disclosure found in the accompanying drawings and the novelty thereof printed out in the appended claims.

Fig. 1 is a perspective view of a first embodiment of a multicore optical fiber with optical connectors according to this invention;

Fig. 2 is a perspective view of a second embodiment of this invention;

Fig. 3 is a perspective view of a third embodiment of this invention;

Fig. 4 is a perspective view of a fourth embodiment of this invention;

Fig. 5 is a perspective view of a fifth embodiment of the invention;

Fig. 6 is a perspective view of a sixth embodiment of the invention;

Fig. 7 is a perspective view of a seventh embodiment of the invention.

An embodiment of a multicore optical fiber with optical connectors according to this invention will be described in detail with reference to the accompanying drawings.

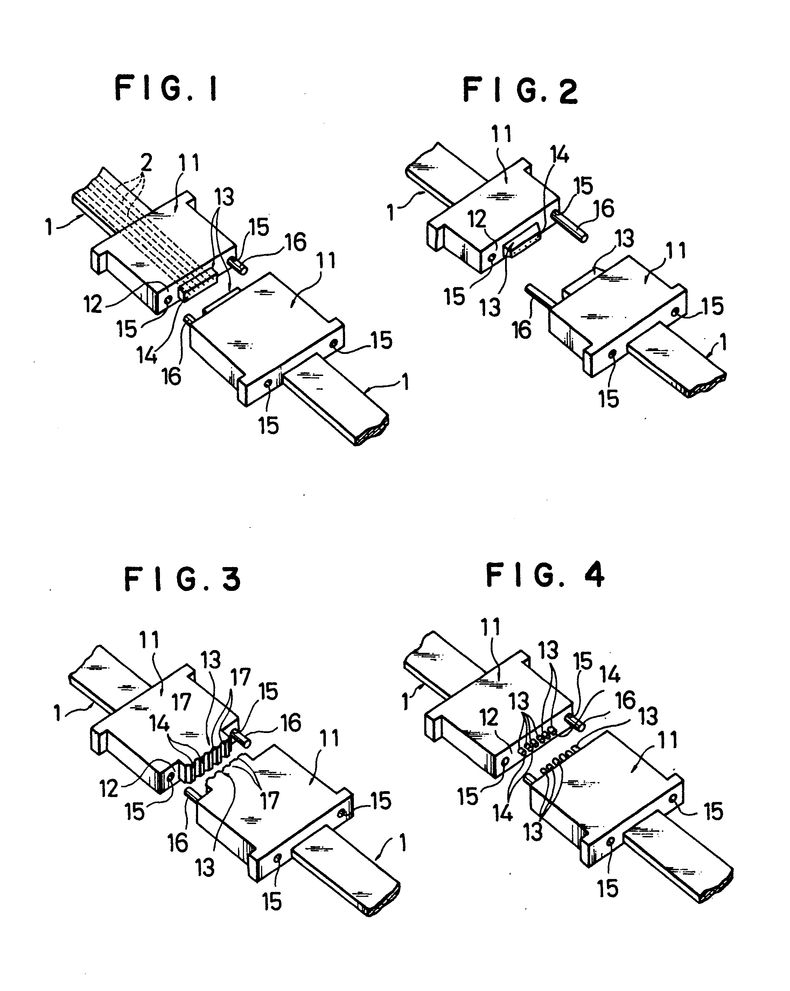

In multicore optical fiber with optical connectors according to this invention shown in Figs. 1 to 7, numeral 1 designates a coated optical fiber, and numeral 11 designates optical connectors.

The coated optical fiber 1 has an optical fiber 2 in a secondary coating layer (an outer coating layer) of circular section, or a plurality of optical fibers 2 in a secondary coating layer of flat square section (tape type) or circular section.

The coated optical fiber 1 is ordinarily formed of a primary coating layer, a buffer coating layer and a secondary coating layer sequentially on the outer periphery of the optical fiber 2. The optical fiber 1 having a plurality of optical fibers 2 in the secondary coating layer is constructed that the optical fibers of the primary and buffer coatings are held in parallel at an equal interval, and the optical fibers 2 are integrally coated by the secondary coating layer.

In the optical fiber 2 described above, the optical fiber 2 formed of glass (quartz, nonoxide or multicomponents) and particularly formed of quartz is employed, but is, in some cases, formed of plastic, or the composite material of quartz and plastic (in which the core is formed of quartz, and clad is formed of plastic) or crystals.

The coating layers for coating the optical fiber 2 is formed of plastic.

The optical fiber 11 is formed at part or front portion of plastic, metal, ceramic or composite material of them, and the main portion is formed frequently of plastic molding or metal molding product.

The sectional shape of the optical connector 11 is generally rectangular, or circular, but may include other than them.

The multicore optical fiber with optical connectors in Fig. 1 is constructed that the optical connectors 11 having a rectangular profile is attached to the ends of the coated optical fibers 1.

In the optical connector 11, a projector 13 made of rectangular parallelepiped shape is formed at part of the end face 12 of the connector 11, and has an even end face 14 without irregularity.

Guides 15, 16 are formed at the other portions of the end faces 12 of the connectors 11.

When the optical connector 11 thus constructed as described above is attached to the end of the tape type coated optical fiber 1, the coating layer of the end side of the optical fiber 1 is removed, the optical fibers 2 are drawn in the necessary length, the optical connector 11 is attached to the ends of the optical fibers 11 to simultaneously coat the ends of the optical fibers 1, and the end faces of the optical fibers 2 are exposed with the end face 14 of the projection 13.

When the optical connector 11 is attached to the end of the coated optical fiber 1 by a plastic molding method such as an insert molding method, the end of the coated optical fiber 1 in which the optical fibers 2 are drawn as described above is set in the molding die, resin is filled in the molding die to mold the optical connectors 11, and the optical connectors 11 are attached to the ends of the optical fibers 1.

Then, the end face 14 of the projection of the optical connector 11 is smoothly polished together with the end faces of the optical fibers.

When plastic or metal optical connector 11 fabricated in advance such as split optical connectors 11 are attached to the ends of the optical fibers 1, the end of the optical fibers 1 from which the optical fibers 2 are drawn as described above are inserted into the split connectors 11, and the ends of the optical fibers and the optical connectors 11 are bonded fixedly by an adhesive.

In this case, the end face 14 of the projection 13 is smoothly polished together with the end faces of the optical fibers.

When the end face 14 of the projection 13 is polished as described above, the end faces of the optical fibers 2 and the end face 14 of the projection 13 become the same plane.

In Fig. 1, one guide 15 formed at the end face 12 of the optical connector 11 is a hole, and the other guide 15 is a pin.

The guide 15 of the pin is formed by inserting a pin made of plastic, metal, ceramic or glass to the guide 15 made of the hole in such a manner that the pin is removable or bonded by an adhesive into the hole.

The multicore optical fiber with optical connectors in Fig. 2 has almost the same as that in Fig. 1 except that the projection 13 formed at the end face 12 of the optical connector 11 is made of a trapezoidal square-sectional conical shape.

A multicore optical fiber with optical connectors in Fig. 3 has almost the same as that in Fig. 1 except the projection 13 formed on the end face 12 of the connector 11.

In case of Fig. 3, recesses 17 are formed between the adjacent portions of the end faces of the optical fibers on the end face 14 of the projection 13 made of a rectangular parallelepiped shape.

In a multicore optical fiber with optical connectors in Fig. 4 has a plurality of columnar - (trapezoidal square-sectional conical) projections 13 aligned laterally at an equal interval on the end face 12 of the optical connector 11 and the end faces of the optical fibers are exposed with the end faces 14 of the projections 13.

In Fig. 4, the projections 13 may be of trapezoidal square-sectional columnar shape or trapezoidal square-sectional conical shape.

The other construction in Fig. 4 is the same as that in Fig. 1.

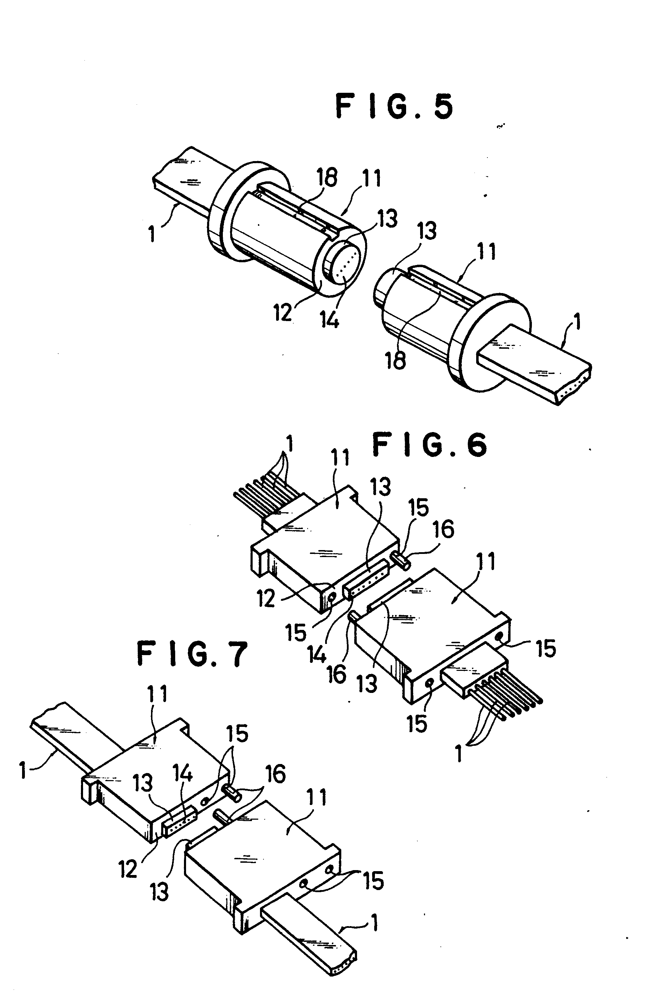

In a multicore optical fiber with optical connectors in Fig. 5, the sectional shape of the optical connector 11 is circular, a projection 12 made of trapezoidal columnar shape is formed on the end face 12 of the optical connector 11, and the end faces of the optical fibers are exposed on the end face 14 of the projection 13.

In the optical connector 11 of Fig. 5, guides 15, 16 made of a hole and a pin as described above may be formed, in the exemplified embodiment, a keyway guide 18 is formed on the outer peripheral surface of the optical connector 11.

The keyway guide 18 corresponds to the key projection (guide) formed on the inner peripheral surface of an adapter (not shown) made of a cylindrical shape to be engaged with one another.

When the keyway is formed on the adapter, a key projection is formed as a guide on the outer peripheral surface of the optical connector 11.

In Fig. 5, the shape of the projection 13 may be trapezoidal conical shape or trapezoidal square-sectional conical shape, and further the shape of the projections 13 described with respect to Figs. 1 and 4 may be also employed as required in Fig. 5.

The other construction in Fig. 5 is the same as that in Fig. 1.

In the embodiments described above, the optical connectors 11 are attached to the ends of the tape type coated optical fibers 1 having a plurality of optical fibers 2 in the secondary coating layer. However, a plurality of coated optical fibers 1 having one optical fiber 2 in the secondary coating layer may be attached with the optical connectors 11 to obtain substantially the same as the multicore optical fiber with optical connectors described with respect to Figs. 1 to 5.

An example will be shown in Fig. 6.

In the multicore optical fiber with optical connectors in Fig. 6, a plurality of coated optical fibers 1 from which the coating layers of the ends are removed are aligned in parallel, optical connectors 11 are simultaneously attached to the outer periphery of the ends of the optical fibers 1, and the end faces of the optical fibers are exposed with the end faces 14 of the projection 13.

In the embodiments described above, the projection 13 is formed at the center of the end face 12 of the optical connector. However, such projections 13 may be displaced to the right or left side or upper or lower side of the end face 12.

An example is shown in Fig. 7, and in the multicore optical fiber with optical connectors in Fig. 7, the projection 13 is displaced to the left side of the end face 12 of the optical connector.

In the multicore optical fiber with optical connectors described above, when the paired multicore optical fibers with the optical connectors are connected by the optical fibers 11, the optical connectors 11 are opposed, and the end faces 12 of the projections 13 of the optical connector 11 are opposed, thereby connecting the end faces of the paired optical fibers.

In this case, since both the guides 15 and 16 are oppositely engaged, the multicore optical fibers can be accurately matched axially, thereby accurately bringing the paired optical fibers 2 between the cores.

The other guide 18 cooperates with the guide of the adapter corresponding thereto to accurately match between the ores as described above.

According to the multicore optical fiber with optical connectors in accordance with this invention as described above, the projection is formed on part of the end face of the optical connector, end faces of the optical fibers are exposed on the end face of the projection. Therefore, the end face of the projection including the end faces of the optical fibers decreases to readily obtain the accuracy of the end face of the projection in the amount reduced in the area including the end faces of the optical fibers and to increase the opposing force per unit area.

Therefore, when the paired optical fibers are connected through the optical connectors, the contacting state and the opposing force of the end faces of the optical fibers can be sufficiently provided to obtain preferably connected state.

Since the end faces of the projections having small area may be accurately finished, the polishing time may be reduced as compared with the case that the end faces of the optical connector are entirely accurately finished, and there is a stepwise difference between the projection and the other face of the end face of the optical connector and both may be clearly positioned. Accordingly, when a guide member such as a guide pin is attached to the end face of the optical connector, there is no possibility of erroneously damaging the end of the projection.

## Claims

1. A multicore optical fiber (1,1) with optical connectors (11) in which the optical connectors are attached to the ends of a plurality of parallel optical fibers (2) comprising projections (13) formed at parts of the end faces of the optical connectors - (11) to expose the end faces of the optical fibers - (2) at the ends (14) of the projections, and an optical connector opposing guide (15,16) provided at the end faces of the optical connectors apart from the projections (13).

2. The multicore optical fiber with optical connectors according to claim 1, wherein a projection - (13) formed on the end face of at least one optical connector exposes a plurality of optical fibers (2).

3. The multicore optical fiber with optical connectors according to claim 1, wherein a plurality of projections (13) are formed on the end face of at least one optical connector (11).

4. A multicore optical fiber with optical connectors according to any of claims 1 to 3, wherein each projection is formed in a rectangular or square profile.

5. A multicore optical fiber with optical connectors according to any of claims 1 to 4, wherein each projection is formed in a circular profile.

6. The multicore optical fiber with optical connectors according to any of claims 1 or 2 or claim 4 or 5 appended thereto, wherein recesses are between adjacent portions of the end faces of optical fibers at the end face (14) of each projection (13).

7. The multicore optical fiber with optical connectors according to any of claims 1 to 6, wherein a said projection (13) is formed at the center on the end face of each optical connector (11).

8. The multicore optical fiber with optical connectors according to any of claims 1 to 6, wherein a said projection (13) is formed on a portion apart from the center of the end face of each optical connector (11).

9. The multicore optical fiber with optical connectors according to any preceding claim, wherein the guide comprises a hole, groove or projection - (e.g. a pin).

10. The multicore optical fiber with optical connectors according to any preceding claim, wherein the optical fibers (1,1) comprise independent optical fibers (2) individually provided with coating layers.

11. The multicore optical fiber with optical connectors according to any preceding claim, wherein the optical fibers (1,1) comprise tapes having optical fibers (2) provided with an integral outer coating layer.

0 226 274

# F I G. 1

# F I G. 2

# F I G. 3

# F I G. 4

# FIG. 5

# FIG. 6

# FIG. 7